# EUROPÄISCHE PATENTANMELDUNG

(11) **EP 4 530 555 A1**
(43) Veröffentlichungstag der Anmeldung: **02.04.2025**
(21) Anmeldenummer: 24199101.7
(22) Anmeldetag: 08.09.2024
(51) Int. Cl.: F24S 25/613, E04D 1/36, F24S 80/70, H02S 20/23, F24S 25/00

(54) **SYSTEM MIT DACHHAKEN UND DICHTUNG**

(30) Priorität: 29.09.2023 DE 102023126753
(71) Anmelder: SL Rack GmbH, 83527 Haag (DE)
(72) Erfinder: Achatz, Florian, 94259 Kirchberg i.W. (DE); Schletter, Ludwig, 83527 Haag i. OB (DE)
(74) Vertreter: Lichtnecker, Markus Christoph

(57) **Zusammenfassung**

Die Erfindung betrifft ein System mit einem Dachhaken, vorzugsweise zur Befestigung eines Solarpanels und/oder eines Photovoltaikmoduls, und einer Dichtung, wobei die Dichtung zumindest einen Abschnitt des Dachhakens vollumfänglich umgibt.

## Beschreibung

Die Erfindung betrifft ein System mit einem Dachhaken.

Dachhaken sind grundsätzlich bekannt. Diese werden beispielsweise zur Montage von Solarpaneelen und/oder Photovoltaik-Modulen eingesetzt. Die Solarpaneele und/oder Photovoltaik-Module werden z.B. an Montageschienen, welche auch Tragschienen genannt werden, montiert.

In DE 10 2018 122 174 A1 wird ein Beispiel eines entsprechenden Dachhakens offenbart. Der Inhalt der DE 10 2018 122 174 A1 wird, beispielsweise im Hinblick auf die Ausführbarkeit und/oder mögliche Ausgestaltungen der Erfindung, vollständig in diese Anmeldung mit einbezogen.

Die Dachhaken werden z.B. an Dachkonstruktionen, beispielsweise an Unterkonstruktionen von Schrägdächern, z.B. Sparren und/oder Balken, befestigt, z.B. verschraubt und/oder eingehängt. Dazu kann der Dachhaken z.B. eine Grundplatte mit Öffnungen aufweisen. An den Öffnungen kann die Grundplatte beispielsweise mittels Schrauben und/oder Bolzen an der Dachkonstruktion befestigt, z.B. verschraubt, werden.

Zur Montage des Dachhakens kann eine Aussparung in ein Dachelement, z.B. einen Dachziegel, einen Dachstein, eine Dachschindel, ein Blech, Bitumen und/oder eine Folie, eingebracht, z.B. ausgeschlagen, ausgestrahlt, ausgefräst und/oder ausgeschnitten, werden.

Grundsätzlich ist das System für jede Dacheindeckung geeignet, beispielsweise auch für Blechdächer.

Ist der Dachhaken an der Unterkonstruktion befestigt, kann das Dachelement im Bereich der Aussparung über dem Dachhaken platziert werden.

Wird der Dachhaken bei geneigten Dächern eingesetzt, deren Neigung beispielsweise kleiner als die Regeldachneigung von 35° ist, kann es vorkommen, dass Wasser in die Aussparung eintritt.

Es ist daher eine Aufgabe der Erfindung, ein System und ein Verfahren zu schaffen, bei dem der Eintritt von Wasser in die Aussparung verhindert wird.

Die Lösung dieser Aufgabe erfolgt durch das System sowie das Verfahren der unabhängigen Ansprüche.

Erfindungsgemäß weist das System einen Dachhaken auf. Dieser ist vorzugsweise zur Befestigung eines Solarpanels und/oder eines Photovoltaikmoduls geeignet und/oder kann hierzu verwendet werden. Bevorzugt wird das Solarpanel und/oder das Photovoltaikmodul mittelbar über eine Montageschiene am Dachhaken befestigt.

Die Form und/oder das Material des Dachhakens ist grundsätzlich beliebig. Beispielsweise kann der Dachhaken ein Kunststoff- und/oder Metallmaterial, z.B. Aluminium und/oder Stahl, z.B. verzinkten Stahl und/oder V2A, aufweisen oder daraus bestehen.

Als Dachhaken wird vorliegend der Haken selbst bezeichnet. Befestigungsmittel für den Dachhaken, z.B. Schrauben und/oder Bolzen, sind nicht Bestandteil des Dachhakens.

Das System weist eine Dichtung, z.B. Ziegelabdichtung und/oder Dachabdichtung, auf. Die Dichtung umgibt zumindest einen Abschnitt des Dachhakens vollumfänglich.

Die Erfindung betrifft ferner einen Bausatz mit einem Dachhaken und einer Dichtung. Ist die Dichtung am Dachhaken befestigt, wird ein Abschnitt des Dachhakens vollständig von der Dichtung umgeben.

Die Dichtung umgibt den Dachhaken selbst. Optional können zudem die Befestigungsmittel des Dachhakens eine Dichtung aufweisen.

Vorzugsweise ist die Dichtung flexibel, beispielsweise wenn Lasten und/oder Kräfte auf den Dachhaken ausgeübt werden

Bevorzugt wird das System bei einer Aufdachbefestigung eingesetzt und nicht im Bereich der bauwerkintegrierten Photovoltaik (BIPV).

Optional kann das System ein Dachelement, vorzugsweise einen Dachziegel, einen Dachstein, eine Dachschindel, ein Blech, Bitumen und/oder eine Folie, mit einer Aussparung aufweisen.

Das Dachelement kann beispielsweise ein Ziegel-, Beton-, Stein- und/oder Holzmaterial umfassen oder daraus bestehen. Grundsätzlich sind zum Beispiel beliebige Ziegel, beispielsweise beliebige Formen und/oder Materialien, denkbar.

Während die Aussparung bei Dachziegeln oder Dachsteinen bevorzugt ausgeschlagen, ausgestrahlt und/oder ausgefräst werden kann, kann die Aussparung bei einem Holzschindel, einem Blech, Bitumen und/oder einer Folie z.B. ausgeschnitten werden.

Die Aussparung ist vorzugsweise an einer Stirnseite des Dachelements vorgesehen.

Beispielsweise kann die Aussparung rechteckförmig, rund oder oval sein.

Die Aussparung ist bevorzugt nach unten hin offen. Vorzugsweise wird die Aussparung nicht vollständig vom Dachelement umgeben.

Die Erfindung betrifft auch die Verwendung des Systems zum Abdichten einer Aussparung eines Dachelements, vorzugsweise eines Dachziegels, eines Dachsteins, einer Dachschindel, eines Blechs, von Bitumen und/oder einer Folie.

Das System verhindert den Eintritt von Wasser in die Aussparung, beispielsweise selbst dann, wenn die Dachneigung weniger als 35° beträgt.

Weiterbildungen der Erfindung sind auch den abhängigen Ansprüchen, der Beschreibung sowie den beigefügten Zeichnungen zu entnehmen.

Gemäß einer Ausführungsform ist der Dachhaken als gebogenes Profil ausgebildet.

Der Dachhaken kann auf diese Weise durch die Aussparung hindurch geführt werden.

Beispielsweise kann der Dachhaken S-förmig ausgebildet sein.

Vorzugsweise kann der Dachhaken wenigstens zwei zueinander parallele Abschnitte aufweisen. Die Dichtung kann dabei an einem unteren der beiden Abschnitte vorgesehen sein.

Nach einer weiteren Ausführungsform weist das Profil eine rechteckförmige Querschnittsfläche auf.

Alternativ kann das Profil eine kreisförmige und/oder ovale Querschnittsfläche aufweisen.

Vorzugsweise ist das Profil, zumindest abschnittsweise, plattenförmig.

Das Profil kann einstückig oder mehrteilig sein. Beispielsweise kann, z.B. zur Höhenverstellung, eine Grundplatte vorgesehen sein.

Alternativ oder zusätzlich weist das Profil wenigstens eine Öffnung für ein Befestigungsmittel, vorzugsweise eine Schraube und/oder einen Bolzen, auf. Die Öffnung kann beispielsweise in der Grundplatte vorgesehen sein.

Gemäß einer weiteren Ausführungsform weist die Dichtung eine Dichtmasse auf oder besteht daraus.

Als Dichtmasse ist hierbei grundsätzlich jedes abdichtende Material geeignet.

Die Dichtmasse kann beispielsweise nachträglich bei montiertem Dachhaken in die Aussparung eingebracht werden.

Nach einer weiteren Ausführungsform weist die Dichtung ein Dichtband, vorzugsweise ein Quellband und/oder Kompriband, auf oder besteht daraus.

Das Dichtband, welches auch als Abdichtband bezeichnet werden kann, dichtet den Bereich zwischen dem Dachhaken und dem Dachelement ab.

Es war überraschend, dass ein Kompriband, welches normalerweise bei Fenster- und/oder Türfugen eingesetzt wird, bei der Abdichtung von Dachhaken eingesetzt werden kann. So ist das Kompriband überraschenderweise in der Lage, dynamische Kräfte, die bei der Belastung des Dachhakens auftreten, zu kompensieren.

Vorzugsweise umfasst das Dichtband einen polyurethanbasierten Schaumstoff oder besteht daraus. Dieser ist beispielsweise UV-beständig und/oder nagetiersicher.

Beispielsweise kann das Dichtband imprägniert und/oder vorkomprimiert sein. Am Bestimmungsort kann sich das Dichtband vorzugsweise langsam ausdehnen und so für eine vollständige Abdichtung sorgen.

Gemäß einer weiteren Ausführungsform weist die Dichtung wenigstens eine erste Abdichtung und eine zweite Abdichtung auf.

Die Dichtung ist hierbei zweiteilig ausgebildet. Auch drei-, vier- oder mehrteilige Ausführungen sind denkbar.

Alternativ kann die Dichtung einteilig sein. Eine einteilige Dichtung kann beispielsweise wie eine Manschette über den Dachhaken geschoben werden. Die Dichtung kann z.B. als Rechteck, Oval oder Kreis ausgebildet sein. Mittig kann eine Dachhakenöffnung für den Dachhaken vorgesehen sein.

Eine zweiteilige Dichtung kann beispielsweise zu einer gemeinsamen Dichtung verbunden werden. Mittig kann eine Dachhakenöffnung für den Dachhaken vorgesehen sein. Die Dichtung kann, z.B. wie eine Manschette, über den Dachhaken geschoben werden. Alternativ können die erste Abdichtung und eine zweite Abdichtung auch erst bei der Montage am Einsatzort miteinander verbunden werden.

Nach einer weiteren Ausführungsform ist die erste Abdichtung und/oder die zweite Abdichtung U-förmig ausgebildet.

Die U-förmigen Abdichtungen können vorzugsweise an den Stirnseiten der Schenkel miteinander verbunden werden, z.B. mittels einer Naht und/oder einer Klettverbindung, und/oder gemeinsam ein Rechteck, ein Oval oder einen Kreis bilden.

Gemäß einer weiteren Ausführungsform weist die erste Abdichtung und/oder die zweite Abdichtung wenigstens eine Klebefläche, vorzugsweise zwei Klebeflächen, auf.

Vorzugsweise sind die Klebeflächen an den Stirnseiten der Schenkel vorgesehen.

Nach einer weiteren Ausführungsform sind die erste Abdichtung und die zweite Abdichtung an den Klebeflächen miteinander verbunden oder verbindbar.

Die Klebeflächen sorgen für eine sichere Verbindung der beiden Abdichtungen.

Die Erfindung betrifft auch ein Verfahren zum Abdichten einer Öffnung eines Dachelements, vorzugsweise eines Dachziegels, eines Dachsteins, einer Dachschindel, eines Blechs, von Bitumen und/oder einer Folie, mit einem erfindungsgemäßen System.

Die Dichtung wird um den Abschnitt des Dachhakens angebracht und der Dachhaken wird montiert.

Die Reihenfolgen ist hierbei grundsätzlich beliebig und kann beispielsweise von der jeweiligen Einbausituation abhängen.

Beispielsweise kann der Dachhaken zunächst an einer Unterkonstruktion befestigt werden. Zuvor oder danach kann die Dichtung am Dachhaken angebracht werden. Anschließend kann das Dachelement im Bereich der Aussparung oberhalb des Dachhakens platziert werden.

Alternativ kann zunächst die vollständige Montage des Dachhakens erfolgen. Das Dachelement kann im Bereich der Aussparung oberhalb des Dachhakens platziert werden. Anschließend kann die Dichtung am Dachhaken angebracht werden. Auf diese Weise können beispielsweise bereits montierte Dachhaken mit einer Dichtung nachgerüstet werden.

Alle hier beschriebenen Ausführungsformen und Bauteile der Vorrichtung sind vorzugsweise dazu ausgebildet, nach dem hier beschriebenen Verfahren montiert zu werden. Ferner können alle hier beschriebenen Ausführungsformen der Vorrichtung sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer Ausführungsform eines erfindungsgemäßen Systems vor der Befestigung der Dichtung am Dachhaken,
- Fig. 2: eine Perspektivansicht des Systems gemäß Fig. 1 nach der Befestigung der Dichtung am Dachhaken,
- Fig. 3: eine Seitenansicht einer Ausführungsform eines erfindungsgemäßen Systems im montierten Zustand, und
- Fig. 4: eine geschnittene Vorderansicht einer Ausführungsform eines erfindungsgemäßen Systems im montierten Zustand.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Vorzugsweise kann die Dichtung und/oder der Dachhaken einteilig ausgebildet sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

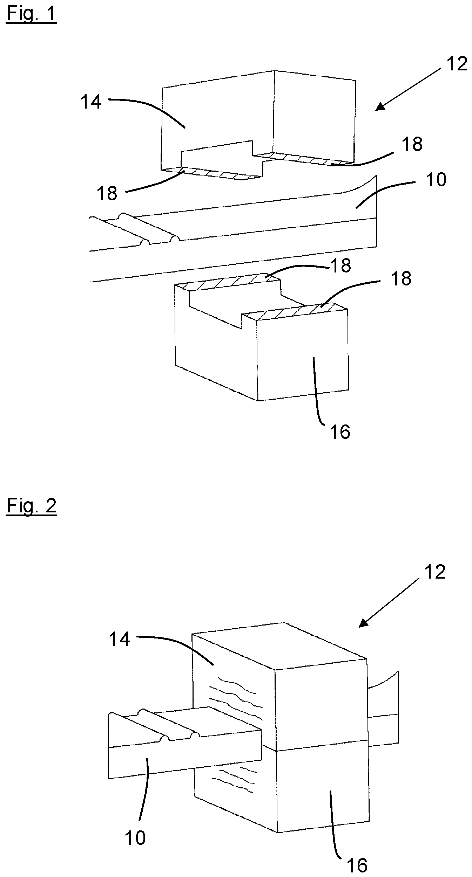

Fig. 1 zeigt einen Ausschnitt eines Dachhakens 10 mit einer Dichtung 12.

Die Dichtung 12 weist eine erste U-förmige Abdichtung 14 und eine zweite U-förmige Abdichtung 16 auf.

Die erste Abdichtung 14 und die zweite Abdichtung 16 weisen an den stirnseitigen Endbereichen der Schenkel jeweils Klebeflächen 18 auf.

Wie in Fig. 2 dargestellt ist, können die erste Abdichtung 14 und die zweite Abdichtung 16 an den Klebeflächen 18 miteinander verklebt werden. Ein Abschnitt des Dachhakens 10 wird somit vollumfänglich von der Dichtung 12 umgeben.

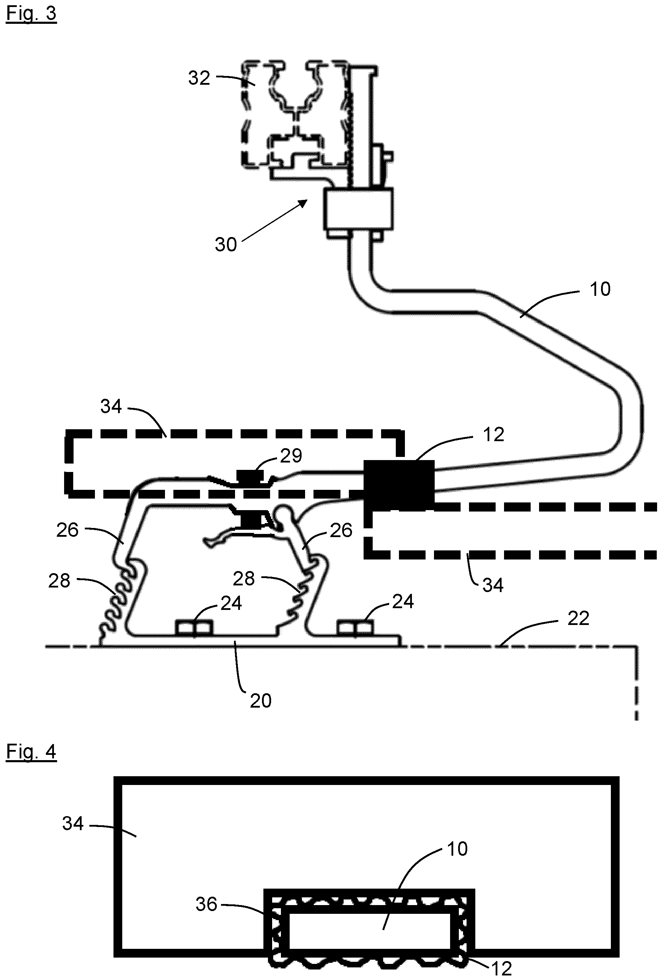

Fig. 3 zeigt das System im montierten Zustand.

Es ist eine rein beispielhafte Ausführungsform des Dachhakens 10 dargestellt. Grundsätzlich ist die Form den Dachhakens 10 beliebig. Beispielsweise kann dieser auch einstückig ausgebildet sein.

Der gezeigte Dachhaken 10 ist S-förmig und zweiteilig ausgebildet.

Eine Grundplatte 20 ist an einer Dachkonstruktionen 22 mittels als Schrauben ausgebildeten Befestigungsmitteln 24 verschraubt.

Der Dachhaken 10 kann Rastfüße 26 aufweisen, die an Nuten 28 der Grundplatte 20 in der gewünschten Höhe eingehängt und/oder eingerastet werden können.

Über eine Fixierschraube 29 kann eine Fixierung in der gewünschten Position erfolgen.

Am oberen Endbereich kann der Dachhaken 10 eine Befestigungsvorrichtung 30 für eine Montageschiene 32 aufweisen. An der Montageschiene 32 können Solarpaneele und/oder Photovoltaik-Module befestigt werden.

Gestrichelt sind zwei Dachelemente 34 dargestellt. Beispielsweise kann die Dichtung 12 im montierten Zustand zumindest abschnittsweise zwischen den zwei Dachelementen 34 angeordnet sein.

Vorzugsweise kann die Dichtung 12 auf dem unteren Dachelement 34 aufliegen.

Das obere Dachelement 34 kann eine Aussparung 36 aufweisen, welche z.B. in Fig. 4 gezeigt ist.

Der Dachhaken 10 ist von der Dichtung 12 umgeben und dichtet die Aussparung 36 des Dachelements 34 ab.

Vorzugsweise steht die Dichtung 12 nicht vor, d.h. diese schließt bündig mit der Stirnseite des Dachelements 34.

Durch die Dichtung 12 wird verhindert, dass Wasser in die Aussparung 36 eindringt.

### Bezugszeichenliste

- 10: Dachhaken
- 12: Dichtung
- 14: erste Abdichtung
- 16: zweite Abdichtung
- 18: Klebefläche
- 20: Grundplatte
- 22: Dachkonstruktionen
- 24: Schraube, Befestigungsmittel
- 26: Rastfuß
- 28: Nut
- 29: Fixierschraube
- 30: Befestigungsvorrichtung
- 32: Montageschiene
- 34: Dachelement
- 36: Aussparung

## Patentansprüche

1. System mit einem Dachhaken (10), vorzugsweise zur Befestigung eines Solarpanels und/oder eines Photovoltaikmoduls, und einer Dichtung (12), wobei
die Dichtung (12) zumindest einen Abschnitt des Dachhakens (10) vollumfänglich umgibt.

2. System nach Anspruch 1,
**dadurch gekennzeichnet,**
**dass** der Dachhaken (10) als gebogenes Profil ausgebildet ist.

3. System nach Anspruch 2,
**dadurch gekennzeichnet,**
**dass** das Profil eine rechteckförmige Querschnittsfläche und/oder wenigstens eine Öffnung für ein Befestigungsmittel (24), vorzugsweise eine Schraube und/oder einen Bolzen, aufweist.

4. System nach einem der vorhergehenden Ansprüche,
**dadurch gekennzeichnet,**
**dass** die Dichtung (12) eine Dichtmasse aufweist oder daraus besteht.

5. System nach einem der vorhergehenden Ansprüche,
**dadurch gekennzeichnet,**
**dass** die Dichtung (12) ein Dichtband, vorzugsweise ein Quellband und/oder Kompriband, aufweist oder daraus besteht.

6. System nach einem der vorhergehenden Ansprüche,
**dadurch gekennzeichnet,**
**dass** die Dichtung (12) wenigstens eine erste Abdichtung (14) und eine zweite Abdichtung (16) aufweist.

7. System nach Anspruch 6,
**dadurch gekennzeichnet,**
**dass** die erste Abdichtung (14) und/oder die zweite Abdichtung (16) U-förmig ausgebildet ist.

8. System nach Anspruch 6 oder 7,
**dadurch gekennzeichnet,**
**dass** die erste Abdichtung (14) und/oder die zweite Abdichtung (16) wenigstens eine Klebefläche (18), vorzugsweise zwei Klebeflächen (18), aufweist.

9. System nach Anspruch 8,
**dadurch gekennzeichnet,**
**dass** die erste Abdichtung (14) und die zweite Abdichtung (16) an den Klebeflächen (18) miteinander verbunden oder verbindbar sind.

10. Verfahren zum Abdichten einer Öffnung eines Dachelements (12), vorzugsweise eines Dachziegels, eines Dachsteins, einer Dachschindel, eines Blechs, von Bitumen und/oder einer Folie, mit einem System nach einem der vorhergehenden Ansprüche, bei dem
die Dichtung (12) um den Abschnitt des Dachhakens (10) angebracht und der Dachhaken (10) montiert wird.
